# EUROPEAN PATENT SPECIFICATION

(11) **EP 2 995 543 B1**
(45) Date of publication and mention of the grant of the patent: **22.01.2020**
(21) Application number: 14795190.9
(22) Date of filing: 30.04.2014
(51) Int. Cl.: B62K 25/08, B62K 21/04, B62K 5/027, B62K 5/05, B62K 5/08, B62K 25/00

(54) **SUSPENSION DEVICE**
AUFHÄNGUNGSVORRICHTUNG
DISPOSITIF DE SUSPENSION

(30) Priority: 09.05.2013 JP 2013098956
(43) Date of publication of application: 16.03.2016
(73) Proprietor: KYB Corporation, Tokyo 105-6111 (JP)
(72) Inventor: KITAMURA, Yasuhiro, Tokyo 105-6111 (JP)
(74) Representative: Grünecker Patent- und Rechtsanwälte PartG mbB
(86) International application number: PCT/JP2014/061946
(87) International publication number: WO 2014/181736

(56) References cited:
- WO-A1-88/03493
- WO-A1-2012/007819
- JP-A- 2004 168 072
- JP-A- 2008 168 893
- JP-A- 2013 023 124
- JP-B1- 5 536 967

## Description

### TECHNICAL FIELD

The present invention relates to improvement of a suspension device.

### BACKGROUND ART

In general, a suspension device is interposed between a vehicle body and a wheel in a vehicle and suppresses transmission of an impact caused by irregularity on a road surface inputted into the wheel to the vehicle body. JP2008-168893A, WO2012/007819A1 disclose those provided with right and left leg portions which support right and left front wheels in a cantilever manner as a suspension device for a front wheel used in a tricycle of a two-front-wheels and one-rear-wheel type. Each of the leg portions includes a pair of telescopic tube members connected to an axle of the front wheel and juxtaposed longitudinally and a vehicle-body side connecting member for connecting vehicle-body sides of these tube members. To the vehicle-body side connecting member, a steering pipe connected to a handle is fixed in a standing state. By operating the handle, the steering pipe is rotated, the vehicle-body side connecting member is made to swing so that a direction of the front wheel can be changed.

### SUMMARY OF INVENTION

The vehicle-body side connecting member disclosed in WO2012/007819A1 includes a body portion on which a steering pipe stands, an arc-shaped support groove formed on front and rear side surface of the body portion, and a pressing mechanism for pressing each of the tube members inserted into these support grooves toward the body portion side, and the pressing mechanism includes a holding portion extending from the body portion, faced the support groove and for sandwiching the tube member between the support groove and itself, a slit provided between the body portion and a distal end portion of the holding portion, and a bolt narrowing the slit. In this case, the tube member is pressed toward a body portion side with high rigidity.

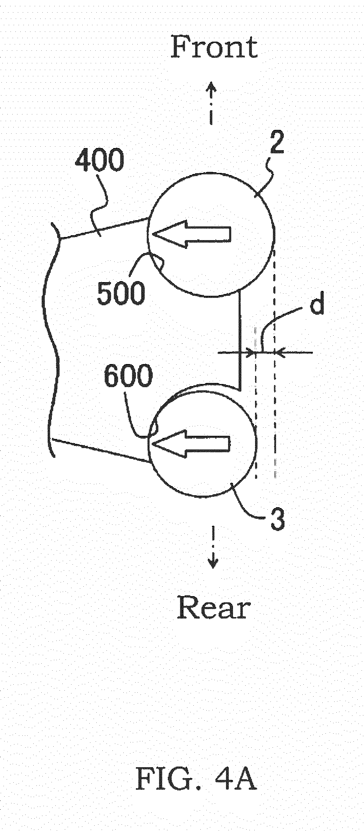

However, a clearance between the support groove and the tube member changes depending on a combination between a tolerance of an inner diameter of the support groove and a tolerance of an outer diameter of the tube member. Thus, when each of the tube members is pressed toward the body portion side on which the steering pipe stands, a difference is caused in mounting positions between the tube member on the front side and the tube member on the rear side in accordance with the clearance. For example, Fig. 4A schematically illustrates a state in which the tube members 2 and 3 with different outer diameters are pressed toward the body portion 400 side and fixed to the front and rear support grooves 500 and 600 having the same diameter. In Fig. 4A, the outer diameter of the front-side tube member 2 is larger than the outer diameter of the rear-side tube member 3, and thus, the clearance on the front side is smaller than that on the rear side. Due to the difference in the clearances as above, the mounting positions of the front and rear tube members 2 and 3 are shifted in a right-and-left direction, and a difference d is generated. If the difference d in the right-and-left direction between the front and rear tube members 2 and 3 becomes larger, a toe angle of the front wheel supported by these tube members 2 and 3 is changed. As a result, there is a concern that linear stability of the vehicle lowers. Further prior art is known from document JP 2013 023124 A.
This document discloses a suspension device according to the preamble of claim 1.

The present invention has an object to suppress a difference in the right-and-left direction between the front and rear tube members and to improve linear stability of the vehicle.
The object is solved by the subject matter of claim 1.

### BRIEF DESCRIPTION OF DRAWINGS

Fig. 1 is a view of a major part of a suspension device according to an embodiment of the present invention when seen from above.
Fig. 2 is a left side view illustrating a mounted state of the suspension device according to the embodiment of the present invention.
Fig. 3 is a perspective view of a vehicle-body side connecting member of the suspension device according to the embodiment of the present invention.
Fig. 4A is a view schematically illustrating a state in which front and rear tube members are pressed toward a body portion and fixed in a prior-art suspension device.
Fig. 4B is a view schematically illustrating a state in which front and rear tube members are pressed toward a deepest portion and fixed in the suspension device according to the embodiment of the present invention.

### DESCRIPTION OF EMBODIMENTS

A suspension device according to an embodiment of the present invention will be explained below by referring to the attached drawings. The same reference numerals given throughout some drawings indicate the same or corresponding components.

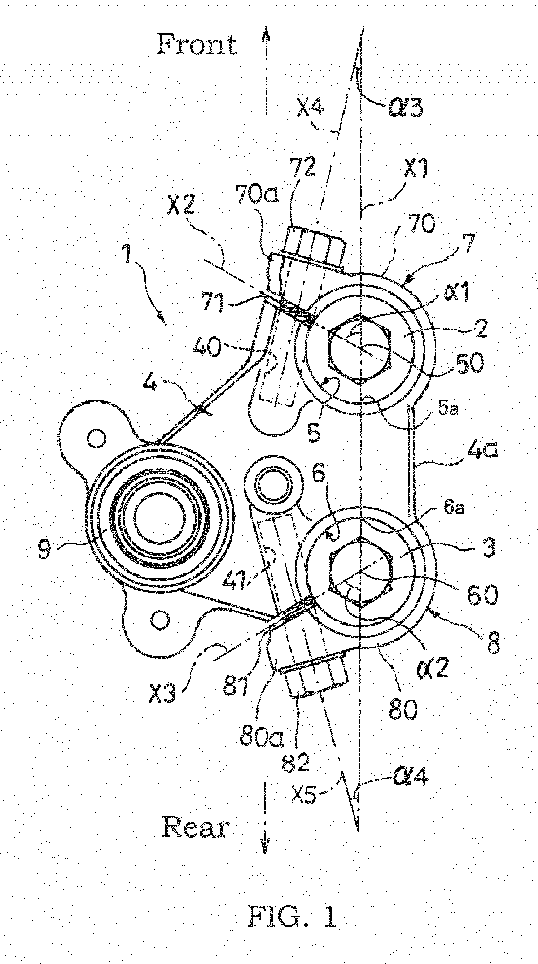

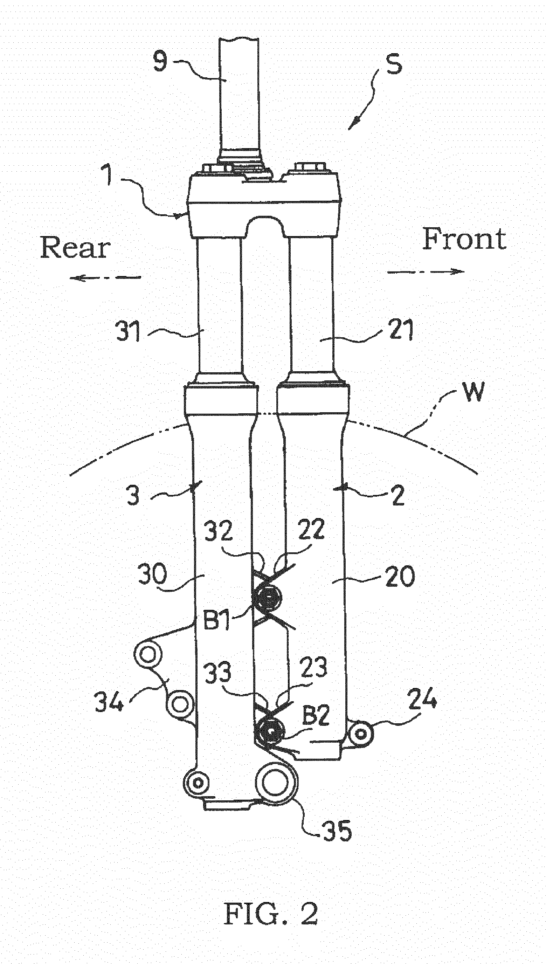

As illustrated in Fig. 1, the suspension device according to this embodiment is interposed between a vehicle body, not shown, and a front wheel (wheel) W (Fig. 2). The suspension device includes a vehicle-body side connecting member 1 connected to a vehicle body side and a pair of front and rear telescopic tube members 2 and 3 connected by the vehicle-body side connecting member 1, and the front wheel (wheel) W is supported by these tube members 2 and 3 from one side. The vehicle-body side connecting member 1 includes a body portion 4 fixed in a state on which a steering pipe 9 stands, arc-shaped support grooves 5 and 6 formed on front and rear side surfaces of the body portion 4, respectively, in a longitudinal direction of the vehicle body, and pressing mechanisms 7 and 8 pressing each of the tube members 2 and 3 inserted into each of the support grooves 5 and 6 toward deepest portions 5a and 6a which these support grooves 5 and 6 are the closest.

The suspension device is used in a saddle type vehicle of a two-front-wheels type, and as illustrated in Fig. 2, it includes right and left leg portions (only one leg portion S is illustrated, while the other is not shown) supporting right and left front wheels (only one front wheel W is illustrated, while the other front wheel is not illustrated) in a cantilever manner. The present invention is applied to one of or both of the leg portions, but one of the leg portions will be explained in the following. The suspension device according to this embodiment may be used in other vehicles and may be used for a front fork of a one-leg type supporting a front wheel of a bicycle in a cantilever manner, for example.

The leg portion S illustrated in Fig. 2 includes a pair of telescopic tube members 2 and 3 juxtaposed in a longitudinal direction of the front wheel W and a vehicle-body side connecting member 1 connecting vehicle body sides of these tube members 2 and 3. To the vehicle-body side connecting member 1, the steering pipe 9 connected to a handle, not shown, is fixed in a standing state. By operating the handle, the steering pipe 9 is rotated, the vehicle-body side connecting member 1 is made to swing, and a direction of the front wheel W can be changed.

The front and rear tube members 2 and 3 are of a telescopic type having outer tubes 20 and 30 connected to a wheel side and inner tubes 21 and 31 connected to the vehicle body side and going into/out of the outer tubes 20 and 30. When an impact caused by irregularity on a road surface is inputted into the front wheel W, the inner tubes 21 and 31 go into/out of the outer tubes 20 and 30 and extend/contract. Though not shown, in a cylindrical gap formed between an overlapping portion of the outer tubes 20, 30 and the inner tubes 21, 31, a bush pivotally supporting the inner tubes 21, 31, capable of going into/out of the outer tubes 20, 30 is provided. A sliding surface of the bush is lubricated by oil accommodated in each of the tube members 2 and 3. In the rear-side tube member 3, though not shown, a damping force generating unit configured to generate a damping force for suppressing a telescopic motion of the tube member 3 by using the oil and a suspension spring elastically supporting the vehicle body by urging the tube member 3 in an extending direction are accommodated. The impact caused by the road surface irregularity is absorbed by the suspension spring, and the telescopic motion of the suspension spring involved with the impact absorption is suppressed by the damping force generating unit. A configuration of each of the tube members 2 and 3 is not limited to the above and can be changed as appropriate. In this embodiment, the outer tubes 20 and 30 are connected to the wheel side and the inner tubes 21 and 31 are connected to the vehicle body side, but it may be so configured that the outer tubes 20 and 30 are connected to the vehicle body side and the inner tubes 21 and 31 are connected to the wheel side. In this embodiment, outer diameters of the outer tubes 20 and 30 in the front and rear tube members 2 and 3 are equal and the outer diameters of the inner tubes 21 and 31 are equal, but the outer diameters of the outer tubes 20 and 30 and the outer diameters of the inner tubes 21 and 31 of the front and rear tube members 2 and 3 may be different.

In the front and rear outer tubes 20 and 30, pairs of upper and lower connecting bosses 22, 23, 32, and 33 extending toward the other outer tube are provided. By fastening the connecting bosses 22 and 23 of the front outer tube 20 and the connecting bosses 32 and 33 of the rear outer tube 30 by bolts B1 and B2, the front and rear tube members 2 and 3 stand in parallel. In the front and rear outer tubes 20 and 30, connecting pieces 24 and 34 for fixing the front and rear outer tubes 20 and 30 so that the tube members 2 and 3 are juxtaposed in the longitudinal direction of the front wheel W are provided. On a lower end portion of the rear outer tube 30, a connecting portion 35 connected to an axle of the front wheel W is provided.

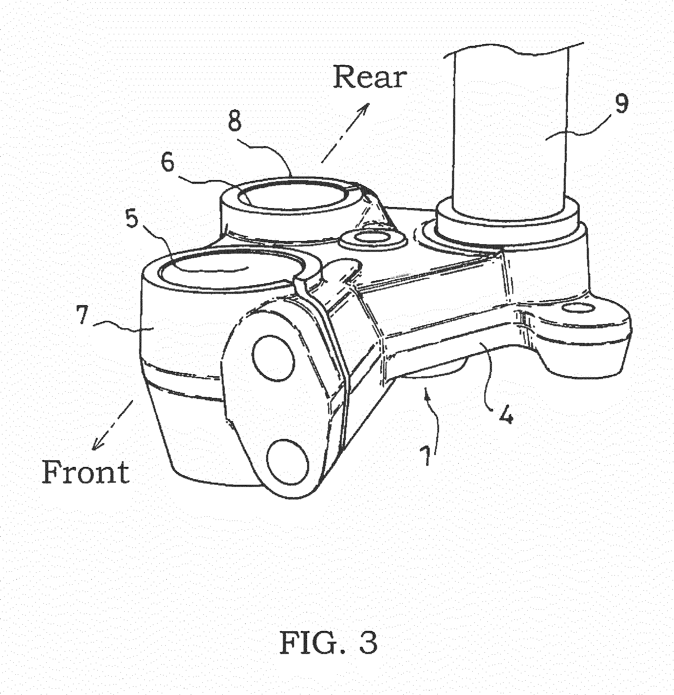

The front and rear inner tubes 21 and 31 are connected at their upper end portions by the vehicle-body side connecting member 1. As illustrated in Fig. 3, the vehicle-body side connecting member 1 includes the pressing mechanisms 7 and 8 on front and rear for pressing the front and rear inner tubes 21 and 31 from the sides and fixing them.

The body portion 4 is formed having a substantially triangular shape on a plan view as illustrated in Fig. 1, and one side 4a is arranged so as to follow the longitudinal direction of the front wheel W. The arc-shaped support grooves 5 and 6 are provided on a front end portion and a rear end portion of the side 4a. To the body portion 4 extending to the side of the side 4a, a steering pipe 9 is fixed in a standing state. The front and rear support grooves 5 and 6 are formed symmetrically in the longitudinal direction, are curved so as to follow the outer peripheries of the inner tubes 21 and 31, and have the same curvature. The front and rear support grooves 5 and 6 become the closest on a straight line X1 connecting curvature centers 50 and 60 of the both support grooves 5 and 6 to each other. In each of the support grooves 5 and 6, portions which are the closest to the other support groove are referred to as the deepest portions 5a and 6a. On the body portion 4, bolt insertion holes 40 and 41 with which bolts 72 and 82 are screwed are formed on the steering pipe 9 side of each of the support grooves 5 and 6, respectively. These bolt insertion holes 40 and 41 are also formed symmetrically in the longitudinal direction. The front and rear bolt insertion holes 40 and 41 formed on the steering pipe 9 side of each of the support grooves 5 and 6 and the bolts 72 and 82 inserted into the front and rear bolt insertion holes 40 and 41 form upper and lower pairs as illustrated in Fig. 3.

The front and rear pressing mechanisms 7 and 8 respectively include arc-shaped holding portions 70 and 80 extending from the body portion 4, faced with the support grooves 5 and 6 and sandwiching the tube members 2 and 3 between the support grooves 5 and 6 and themselves, slits 71 and 81 formed between distal end portions 70a and 80a of the holding portions 70 and 80 and the body portion 4, and bolts 72 and 82 for narrowing widths of the slits 71 and 81.

The front and rear slits 71 and 81 are arranged symmetrically in the longitudinal direction. As illustrated in Fig. 1, the front and rear slits 71 and 81 are formed with an angle of approximately 60 degrees to a straight line X1 connecting curvature centers 50 and 60 of the both support grooves 5 and 6 to each other. Center lines X2 and X3 of the slits 71 and 81, respectively, pass in the vicinity of the curvature centers 50 and 60 of the support grooves 5 and 6, respectively, and angles α1 and α2 formed by the center lines X2 and X3 of the slits 71 and 81 and the straight line X1 become approximately 60 degrees. The positions and the shapes of the slits 71 and 81 can be changed as appropriate within a range not obstructing deformation of the holding portions 70 and 80 to which the tube members 2 and 3 are pressed and fixed.

Moreover, since the front and rear bolt insertion holes 40 and 41 are formed symmetrically in the longitudinal direction as described above, the front and rear bolts 72 and 82 are also arranged symmetrically in the longitudinal direction. Reference character X4 in Fig. 1 indicates a shaft core line of the front-side bolt 72, and reference character X5 indicates a shaft core line of the rear-side bolt 82. Intersection angles α3 and α4 between the straight line X1 connecting the curvature centers 50 and 60 of the support grooves 5 and 6 and the shaft core lines X4 and X5 are set to become within 45 degrees. The bolts 72 and 82 are arranged so that head sides are brought close to the straight line X1 and screw sides are spaced away from the straight line X1, and the shaft core lines X4 and X5 are oblique to the straight line X1. Arrangement of the bolts 72 and 82 is not limited to the above-described arrangement, and they may be arranged so that the shaft core lines X4 and X5 may be parallel with the straight line X1 or the head sides are spaced away from the straight line X1 and the screw sides are brought close to the straight line X1.

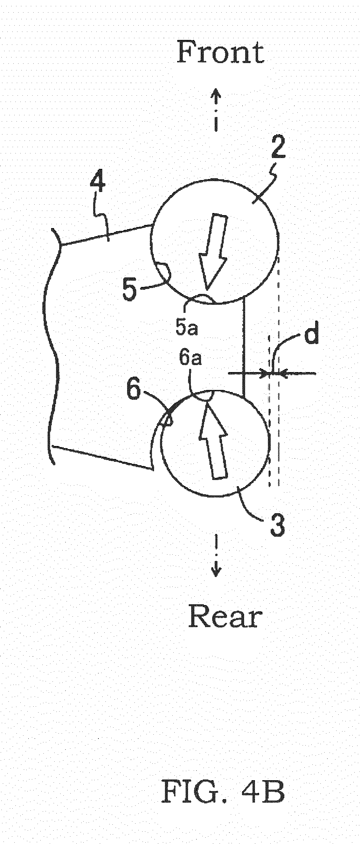

Subsequently, an assembling method of the inner tubes 21 and 31 will be explained. First, the upper end portions of the inner tubes 21 and 31 are inserted into spaces formed between the support grooves 5 and 6 and the holding portions 70 and 80, respectively. Subsequently, the bolts 72 and 82 are inserted from outside of the distal end portions 70a and 80a of the holding portions 70 and 80 and screwed into the bolt insertion holes 40 and 41. The widths of the slits 71 and 81 are narrowed in accordance with screwed amounts of the bolts 72 and 82, and the inner tubes 21 and 31 are pressed toward the deepest portions 5a and 6a of the support grooves 5 and 6 by the holding portions 70 and 80 and fixed to the body portion 4. At this time, the tube members 2 and 3 are pressed along a direction of axial forces of the bolts 72 and 82, that is, substantially in parallel with the shaft core lines X4 and X5 of the bolts 72 and 82, and thus, they are pressed to the vicinity of the deepest portions 5a and 6a of the support grooves 5 and 6. Fig. 4B schematically illustrates a case in which the front and rear tube members 2 and 3 with different outer diameters are pressed and fixed to the vicinities of the deepest portions 5a and 6a of the front and rear support grooves 5 and 6 with the same diameter. In this way, when the tube members 2 and 3 are pressed and fixed to the body portion 4, a difference between the clearance between the front-side support groove 5 and the tube member 2 and the clearance between the rear-side support groove 6 and the tube member 3 becomes hard to affect the difference d in the right-and-left direction of the front and rear tube members 2 and 3, and the difference d can be suppressed. That is, in order to suppress the difference d in the right-and-left direction, it is most effective to make the shaft core lines X4 and X5 of the bolts 72 and 82 parallel with the straight line X1 and to press the tube members 2 and 3 to the deepest portions 5a and 6a.

Subsequently, a working effect of the suspension device according to this embodiment will be explained.

In this embodiment, the intersection angles α3 and α4 between the shaft core lines X4 and X5 of the bolt 72 of the front-side pressing mechanism 7 and the bolt 82 of the rear-side pressing mechanism 8 and the straight line X1 connecting the curvature centers 50 and 60 of the front and rear support grooves 5 and 6, respectively, are within 45 degrees. Thus, the front and rear tube members 2 and 3 can be reliably pressed toward the deepest portions 5a and 6a of the support grooves 5 and 6, respectively. The sizes of the intersection angles α3 and α4 can be changed as appropriate.

In this embodiment, the steering pipe 9 is fixed to the body portion 4 in a standing state, and each of the bolts 72 and 82 of the pressing mechanisms 7 and 8 is arranged on the steering pipe 9 sides of the support grooves 5 and 6. Thus, even when the right and left leg portions constituting the suspension device are brought close, and the front and rear tube members constituting the left-side leg portion and the front and rear tube members constituting the right-side leg portion are brought close, the bolts 72 and 82 do not protrude to the other leg portion side. As a result, interference between the bolts 72 and 82 of the one leg portion and the other leg portion can be avoided. The bolts 72 and 82 may be provided on a side opposite to the steering pipe 9 with respect to the support grooves 5 and 6, and arrangement of the bolts 72 and 82 can be changed as appropriate.

Moreover, in this embodiment, outer diameters of portions of the tube members 2 and 3 inserted into the support grooves 5 and 6, respectively (the inner tubes 21 and 31 in this embodiment), are formed equal, and the support grooves 5 and 6 are formed symmetrically in the longitudinal direction. Thus, since each of the tube members 2 and 3 is pressed equally, the difference d in the right-and-left direction can be made smaller. The outer diameters of the portions of the tube members 2 and 3 inserted into the support grooves 5 and 6, respectively, may be different, and the support grooves 5 and 6 do not have to be formed symmetrically in the longitudinal direction.

Moreover, in this embodiment, the bolt 72 of the front-side pressing mechanism 7 and the bolt 82 of the rear-side pressing mechanism 8 are arranged symmetrically in the longitudinal direction. Thus, since the tube members 2 and 3 are pressed equally, the difference d in the right-and-left direction can be made smaller. Each of the bolts 72 and 82 does not have to be arranged symmetrically in the longitudinal direction, and the arrangement of the bolts 72 and 82 can be changed as appropriate.

Moreover, in this embodiment, the pressing mechanisms 7 and 8 include the arc-shaped holding portions 70 and 80 extending from the body portion 4 and sandwiching the tube members 2 and 3 between the support grooves 5 and 6 and themselves, respectively, the slits 71 and 81 formed between the distal end portions 70a and 80a of the holding portions 70 and 80 and the body portion 4, and the bolts 72 and 82 for narrowing the widths of the slits 71 and 81, and each of the slits 71 and 81 is formed at a position closer to the body portion 4. Thus, since the bolts 72 and 82 can be screwed with the thick body portion 4, the configurations of the pressing mechanisms 7 and 8 can be simplified. The positions of the slits 71 and 81 or the configurations of the pressing mechanisms are not limited to the above but can be changed as appropriate as long as the tube members 2 and 3 can be pressed toward the deepest portions 5a and 6a of the support grooves 5 and 6.

Moreover, in this embodiment, the suspension device is interposed between the vehicle body and the front wheel (wheel) W, includes the vehicle-body side connecting member 1 connected to the vehicle body side and the pair of front and rear telescopic tube members 2 and 3 connected by this vehicle-body side connecting member 1, and the front wheel W is supported from one side by these tube members 2 and 3. The vehicle-body side connecting member 1 includes the body portion 4, the arc-shaped support grooves 5 and 6, formed on front and rear side surfaces of the body portion 4, respectively, in the longitudinal direction of the vehicle body, and the pressing mechanisms 7 and 8 pressing the tube members 2 and 3 inserted into the support grooves 5 and 6 toward the deepest portions 5a and 6a where the support grooves 5 and 6 are the closest to each other, respectively. The support grooves 5 and 6 are the closest to each other on the straight line X1 connecting the curvature centers 50 and 60 of the support grooves 5 and 6, and the straight line X1 extends in the longitudinal direction of the front wheel W. Thus, by pressing the tube members 2 and 3 toward the deepest portions 5a and 6a of the support grooves 5 and 6, respectively, each of the tube members 2 and 3 is drawn in the longitudinal direction of the front wheel W, and the difference in the right-and-left direction of the tube members 2 and 3 can be suppressed. As a result, a change of the toe angle is suppressed, and linear stability of the vehicle can be improved.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2013-098956 filed with the Japan Patent Office on May 9, 2013.

## Claims

1. A suspension device interposed between a vehicle body and a wheel (W), provided with a vehicle-body side connecting member (1) connected to a vehicle body side and a pair of front and rear telescopic tube members (2, 3) connected by the vehicle-body side connecting member (1), the wheel (W) being supported from one side by the pair of tube members (2, 3),
wherein the vehicle-body side connecting member (1) comprises:
- a body portion (4), a steering pipe (9) being fixed to the body portion (4) in a standing state,
- an arc-shaped support groove (5, 6) formed respectively on front and rear side surfaces of the body portion (4) in a longitudinal direction of the vehicle body, and
- a pressing mechanism (7, 8) provided at each of the support grooves (5, 6) and configured to press the corresponding tube member (2, 3) inserted into the corresponding support groove (5, 6) toward a deepest portion (5a, 6a) of the corresponding support groove (5, 6) where the support grooves (5, 6) are the closest to each other,
wherein each of the pressing mechanisms (7, 8) includes
- an arc-shaped holding portion (70, 80) extending from the body portion (4) and sandwiching the corresponding tube member (2, 3) between the corresponding support groove (5, 6) and itself,
- a slit (71, 81) formed between a distal end portion (70a, 80a) of said holding portion (70, 80) and the body portion (4), and
- a bolt (72, 82) configured to narrow a width of said slit (71, 81), respectively, and
wherein the slits (71, 81) are arranged on a steering pipe side,
**characterized in that** the bolt (72) of the pressing mechanism (7) on a front side and the bolt (82) of the pressing mechanism (8) on a rear side are arranged symmetrically in the longitudinal direction of the vehicle body, and
an angle of intersection (α3, α4) between each of shaft core lines (X4, X5) of the bolt (72) of the pressing mechanism (7) on the front side and the bolt (82) of the pressing mechanism (8) on the rear side and a straight line (X1) connecting curvature centers (50, 60) of the support groove (5) on the front side and the support groove (6) on the rear side is within 45 degrees.

2. The suspension device according to claim 1, wherein
outer diameters of portions of the tube member (2) on the front side and the tube member (3) on the rear side inserted into the support grooves (5, 6) are formed equal, and the support groove (5) on the front side and the support groove (6) on the rear side are formed symmetrically in the longitudinal direction of the vehicle body.

3. The suspension device according to claim 1 or 2, wherein
the bolt (72) of the pressing mechanism (7) on the front side and the bolt (82) of the pressing mechanism (8) on the rear side are arranged on the steering pipe side.

4. The suspension device according to any one of claims 1-3, wherein the slit (71) of the pressing mechanism (7) on the front side and the slit (81) of the pressing mechanism (8) on the rear side are arranged symmetrically in the longitudinal direction of the vehicle body, and an angle of intersection (α1, α2) between each of center lines (X2, X3) of the slit (71) of the pressing mechanism (7) on the front side and the slit (81) of the pressing mechanism (8) on the rear side and the straight line (X1) connecting the curvature centers (50, 60) of the support groove (5) on the front side and the support groove (6) on the rear side is approximately 60 degrees.

## Patentansprüche

1. Eine Aufhängungsvorrichtung vorgesehen zwischen einem Fahrzeugkörper und einem Rad (W), bereitgestellt mit einem fahrzeugkörperseitigen Verbindungsglied (1) verbunden mit einer Fahrzeugkörperseite und einem Paar von vorderen und hinteren Teleskoprohrgliedern (2, 3) die mit dem fahrzeugkörperseitigen Verbindungsglied (1) verbunden sind, das Rad (W) ist von einer Seite durch das Paar von Rohrgliedern (2, 3) gestützt, wobei das fahrzeugkörperseitige Verbindungsglied (1) aufweist:
- einen Körperabschnitt (4), ein Lenkrohr (9), das mit dem Körperabschnitt (4) in einem stehenden Zustand fixiert ist,
- eine bogenförmige Stützrinne (5, 6) die entsprechend an vorderen und hinteren Seitenflächen des Körperabschnitts (4) in einer Längsrichtung des Fahrzeugkörpers geformt ist, und
- ein Klemmmechanismus (7, 8), der an jeder der Stützrinnen (5, 6) vorgesehen ist und konfiguriert ist, das entsprechende Rohrglied (2, 3), das in die entsprechende Stützrinne (5, 6) eingesetzt sind, zu einem tiefsten Abschnitt (5a, 6a) der entsprechenden Stützrinne (5, 6) zu drücken, wo die Stützrinnen (5, 6) am nahestehen beieinander liegen,
wobei jeder der Klemmmechanismen (7, 8) beinhaltet
- einen bogenförmigen Halteabschnitt (70, 80), der sich von dem Körperabschnitt (4) erstreckt und die entsprechenden Rohrglieder (2, 3) zwischen die entsprechende Stützrinne (5, 6) passt und
- einen Schlitz (71, 81), der zwischen einem distalen Endabschnitt (70a, 80a) des Halteabschnitts (70, 80) und dem Körperabschnitt (4) geformt ist, und
- ein Bolzen (72, 82) der zum Verringern einer Weite des Schlitzes (71, 81) entsprechend vorgesehen ist, und wobei die Schlitze (71, 81) an einer Lenkrohrseite angeordnet sind, **dadurch gekennzeichnet, dass**
- der Bolzen (72) des Klemmmechanismus (7) an einer Vorderseite und der Bolzen (82) des Klemmmechanismus (8) an einer Rückseite symmetrisch in der Längsrichtung des Fahrzeugkörpers angeordnet sind, und
ein Schnittwinkel (α3, α4) zwischen jeder Schaftkernlinie (X4, X5) des Bolzens (72) des Klemmmechanismus (7) an der Vorderseite und des Bolzens (82) des Klemmmechanismus (8) an der Rückseite und einer geraden Linie (X1) die die Bogenzentren (50, 60) der Stützrinne (5) an der Vorderseite und der Stützrinne (6) an der Rückseite verbindet, innerhalb von 45° Grad liegt.

2. Die Aufhängungsvorrichtung gemäß Anspruch 1, wobei Außendurchmesser von Abschnitten des Rohrglieds (2) an der Vorderseite und des Rohrglieds (3) an der Rückseite die in die entsprechenden Stützrinnen (5, 6) eingesetzt sind, gleichgeformt sind, und die Stützrinne (5) an der Vorderseite und die Stützrinne (6) an der Rückseite symmetrisch in der Längsrichtung des Fahrzeugkörpers geformt sind.

3. Die Aufhängungsvorrichtung gemäß Anspruch 1 oder 2, wobei der Bolzen (72) des Klemmmechanismus (7) an der Vorderseite und der Bolzen (82) des Klemmmechanismus (8) an der Rückseite an der Lenkrohrseite angeordnet sind.

4. Die Aufhängungsvorrichtung gemäß einem der Ansprüche 1 bis 3, wobei der Schlitz (71) des Klemmmechanismus (7) an der Vorderseite und der Schlitz (81) des Klemmmechanismus (8) an der Rückseite in der Längsrichtung des Fahrzeugkörpers symmetrisch angeordnet sind, und ein Schnittwinkel (α1, α2) zwischen Zentrumslinien (X2, X3) des Schlitzes (71) des Klemmmechanismus (7) an der Vorderseite und des Schlitzes (81) des Klemmmechanismus (8) an der Rückseite und die gerade Linie (X1) die Bogenzentren (50, 60) der Stützrinne (5) an der Vorderseite und der Stützrinne (6) an der Rückseite ungefähr 60° Grad beträgt.

## Revendications

1. Dispositif de suspension interposé entre un châssis de véhicule et une roue (W), doté d'un élément de connexion de côté de châssis de véhicule (1) connecté à un côté de châssis de véhicule et une paire d'éléments tubulaires télescopiques avant et arrière (2, 3) connectés par l'élément de connexion de côté de châssis de véhicule (1), la roue (W) étant soutenue depuis un côté par la paire d'éléments tubulaires (2, 3),
dans lequel l'élément de connexion de côté de châssis de véhicule (1) comprend :
- une partie de châssis (4), un tube de direction (9) fixé à la partie de châssis (4) dans un état dressé,
- une cavité de soutien en forme d'arc (5, 6) formée respectivement sur des surfaces latérales avant et arrière de la partie de châssis (4) dans une direction longitudinale du châssis de véhicule, et
- un mécanisme de pression (7, 8) disposé au niveau de chacune des cavités de soutien (5, 6) et configuré pour presser l'élément tubulaire correspondant (2, 3) inséré dans la cavité de soutien correspondante (5, 6) vers une partie plus profonde (5a, 6a) de la cavité de soutien correspondante (5, 6)
où les cavités de soutien (5, 6) sont les plus proches l'une de l'autre,
dans lequel chacun des mécanismes de pression (7, 8) inclut
- une partie de maintien en forme d'arc (70, 80) s'étendant depuis la partie de châssis (4) et prenant en sandwich l'élément tubulaire correspondant (2, 3) entre la cavité de soutien correspondante (5, 6) et elle-même,
- une fente (71, 81) formée entre une partie d'extrémité distale (70a, 80a) de ladite partie de maintien (70, 80) et la partie de châssis (4), et
- un boulon (72, 82) configuré pour réduire une largeur de ladite gorge (71, 81),
respectivement, et
dans lequel les fentes (71, 81) sont disposées sur un côté de tube de direction,
**caractérisé en ce que**
le boulon (72) du mécanisme de pression (7) sur un côté avant et le boulon (82) du mécanisme de pression (8) sur un côté arrière sont disposés symétriquement dans la direction longitudinale du châssis de véhicule, et
un angle d'intersection (α3, α4) entre chacune des lignes d'âme d'arbre (X4, X5) du boulon (72) du mécanisme de pression (7) sur le côté avant et du boulon (82) du mécanisme de pression (8) sur le côté arrière et une ligne droite (X1) connectant des centres de courbure (50, 60) de la cavité de soutien (5) sur le côté avant et la cavité de soutien (6) sur le côté arrière s'inscrit dans les 45 degrés.

2. Le dispositif de suspension selon la revendication 1, dans lequel
des diamètres extérieurs des parties de l'élément tubulaire (2) sur le côté avant et de l'élément tubulaire (3) sur le côté arrière insérées dans les cavités de soutien (5, 6) sont constitués égaux, et la cavité de soutien (5) sur le côté avant et la cavité de soutien (6) sur le côté arrière sont constituées symétriquement dans la direction longitudinale du châssis de véhicule.

3. Le dispositif de suspension selon la revendication 1 ou 2, dans lequel
Le boulon (72) du mécanisme de pression (7) sur le côté avant et le boulon (82) du mécanisme de pression (8) sur le côté arrière sont disposés sur le côté de tube de direction.

4. Le dispositif de suspension selon l'une quelconque des revendications 1 à 3, dans lequel, la fente (71) du mécanisme de pression (7) sur le côté avant et la fente (81) du mécanisme de pression (8) sur le côté arrière sont disposées symétriquement dans la direction longitudinale du châssis de véhicule, et
un angle d'intersection (α1, α2) entre chacune des lignes centrales (X2, X3) de la fente (71) du mécanisme de pression (7) sur le côté avant et de la fente (81) du mécanisme de pression (8) sur le côté arrière et la ligne droite (X1) connectant les centres de courbure (50, 60) de la cavité de soutien (5) sur le côté avant et la cavité de soutien (6) sur le côté arrière est d'environ 60 degrés.
